# FASCICULE DE BREVET EUROPEEN

(11) **EP 1 759 459 B1**
(45) Date de publication et mention de la délivrance du brevet: **26.12.2018**
(21) Numéro de dépôt: 05761131.1
(22) Date de dépôt: 17.06.2005
(51) Int. Cl.: H03K 5/13, H04L 7/027

(54) **DISPOSITIF ELECTRONIQUE DE GENERATION DE SIGNAUX DE SYNCHRONISATION**
ELEKTRONISCHE VORRICHTUNG ZUR ERZEUGUNG VON SYNCHRONISATIONSSIGNALEN
ELECTRONIC DEVICE FOR GENERATING SYNCHRONISATION SIGNALS

(30) Priorité: 22.06.2004 FR 0406780
(43) Date de publication de la demande: 07.03.2007
(73) Titulaire: THALES, 92400 Courbevoie (FR)
(72) Inventeur: Lefebvre, Patrick, F-94117 ARCUEIL Cedex (FR)
(74) Mandataire: Bréda, Jean-Marc
(86) Numéro de dépôt international: PCT/EP2005/052825
(87) Numéro de publication internationale: WO 2005/125010

(56) Documents cités:
- EP-A- 0 546 618
- GB-A- 1 464 387
- US-A1- 2001 010 003
- US-E- R E36 063

## Description

Le domaine de l'invention est celui des dispositifs électroniques de génération de signaux de synchronisation. Plus spécifiquement, le domaine technique est celui des signaux de synchronisation à très haute résolution, la précision temporelle des signaux étant inférieure à la nanoseconde. Ces dispositifs sont notamment utilisés dans les chaînes lasers délivrant des trains d'impulsions laser ultra-brèves à haute énergie, la durée des impulsions étant de l'ordre de quelques centaines de femtosecondes et leur énergie de l'ordre du térawatt.

Ces chaînes comportent le plus souvent un grand nombre d'éléments optoélectroniques nécessaires à la génération, à l'amplification et à la mise en forme des impulsions laser ainsi que des éléments de commande, de contrôle et de mesure de ces impulsions. Or, les impulsions émises ayant une durée très brève, il est fondamental de synchroniser les différents éléments de la chaîne avec une grande précision temporelle de façon à garantir à la fois un fonctionnement optimal de la chaîne et la meilleure reproductibilité possible des impulsions émises.

Les dispositifs de synchronisation actuels présentent un certain nombre d'inconvénients. D'une part, l'horloge interne de ces différents dispositifs n'est pas nécessairement parfaitement synchronisée avec un signal externe issu d'un élément du système à synchroniser. D'autre part, lorsque le système comporte un grand nombre d'éléments à synchroniser, il devient impossible de tous les synchroniser avec un seul dispositif de synchronisation. Dans ce cas, on utilise plusieurs dispositifs de synchronisation qui sont synchronisés entre eux par des dispositifs de déclenchement encore appelés en terminologie anglo-saxonne « trigger ». Ces déclenchements sont réalisés à partir des signaux d'horloge interne des dispositifs de synchronisation. Ces signaux d'horloge sont périodiques. On démontre que la précision de déclenchement est égale à une période du signal d'horloge. Par exemple, pour un signal d'horloge émis à une fréquence de 100 mégaHertz, la précision de synchronisation est égale alors à une période, soit 10 nanosecondes. Cette précision est, pour certaines applications, insuffisante pour permettre une synchronisation parfaite des différents éléments du système.

Le document US RE 36 063 E présente la génération de signaux de synchronisation à partir d'un signal d'horloge.

Le document US 2001/010003 A1 propose une chaîne d'amplification laser qui est contrôlée par des moyens de synchronisation.

Aussi, l'invention propose un dispositif fonctionnant non plus avec une horloge interne mais avec une horloge externe issue du dispositif à synchroniser. On évite ainsi toute dérive temporelle et on augmente la précision de synchronisation des signaux de synchronisation. Elle propose également un système comportant plusieurs dispositifs de ce type interconnectés entre eux de sorte que la synchronisation des différents dispositifs reste parfaite. On peut ainsi commander avec une très grande précision un nombre quasi-illimité d'appareils. Ces dispositifs peuvent être pilotés par un micro-ordinateur, permettant ainsi une mise en oeuvre rapide, simple et ergonomique au moyen de logiciels spécifiquement dédiés à ce type d'applications.

L'invention est définie par les revendications 1-14.

Plus précisément, l'invention a pour objet un dispositif électronique de génération de signaux de synchronisation à partir d'un premier signal d'horloge externe émis à une première fréquence d'oscillation, ledit signal étant fourni sur une entrée dite entrée horloge, caractérisé en ce qu'il comporte au moins :
- des premiers moyens électroniques de mise en forme du signal d'horloge externe de façon à obtenir un signal sinusoïdal de fréquence identique à la première fréquence d'oscillation ;
- des seconds moyens électroniques de génération à partir dudit signal sinusoïdal :
   ∘ d'un premier signal périodique de synchronisation servant de référence de base de temps, ledit signal ayant une première fréquence de répétition, ledit signal étant fourni sur une sortie électronique dite sortie référence.
   ∘ d'une pluralité de seconds signaux périodiques de synchronisation ayant des secondes fréquences de répétition, lesdits seconds signaux étant décalés d'une durée programmable par rapport au premier signal ce synchronisation, lesdits seconds signaux étant fournis sur des sorties électroniques dites sorties signaux à délais programmés.

Avantageusement, le dispositif comporte également des moyens de génération d'un second signal d'horloge externe de synchronisation ayant une fréquence identique au premier signal d'horloge externe, ledit signal étant fourni sur une sortie électronique dite sortie horloge, les seconds moyens électroniques comprennent un composant numérique programmable, notamment de type FPGA, acronyme anglo-saxon pour « Fast Programmable Gate Array », ledit composant numérique programmable commandant un ensemble de lignes à retard, chacun des seconds signaux de synchronisation étant issus desdites lignes à retard.

Avantageusement, le premier signal de synchronisation a la forme d'un train d'impulsions temporelles identiques, chaque impulsion ayant la forme d'un créneau ; les seconds signaux de synchronisation ont également la forme de trains d'impulsions temporelles identiques, chaque impulsion ayant la forme d'un créneau, le front de montée et le front de descente dudit créneau étant décalés d'une première durée et d'une seconde durée programmables par rapport au front de montée du créneau correspondant du premier signal de synchronisation.

De plus, le composant numérique programmable comprend une mémoire électronique dans laquelle sont stockées les paramètres nécessaires permettant au dispositif électronique de fonctionner en autonome, le dispositif comporte également des moyens d'interface électronique avec un micro-ordinateur, ledit micro-ordinateur permettant de commander et de programmer les fonctions du dispositif. Il comprend également des moyens électroniques de déclenchement permettant de synchroniser certaines fonctions du dispositif à partir d'au moins un signal externe, ledit signal étant fourni sur une entrée électronique dite entrée « Trigger ». Enfin, le dispositif comprend des moyens de commande permettant de délivrer des signaux de commande pour des dispositifs électroniques ou pour des dispositifs électromécaniques ou pour des systèmes de sécurité, lesdits signaux étant délivrés sur des sortie électroniques de commande.

Avantageusement, les premiers moyens électroniques comportent un dispositif de filtrage électronique et un dispositif à gain variable, les moyens de génération du second signal d'horloge externe de synchronisation sont essentiellement un coupleur électronique placé en sortie du dispositif à gain variable.

Généralement, la première fréquence d'oscillation est comprise entre 20 mégaHertz et 100 mégaHertz, la fréquence de répétition des signaux de synchronisation est comprise entre 1 Hertz et 20 mégaHertz, les fronts de montée et de descente des créneaux ont une précision temporelle de 250 picosecondes.

L'invention concerne également un système électronique de génération de signaux de synchronisation à partir d'un premier signal d'horloge externe émis à une première fréquence d'oscillation, caractérisé en ce qu'il comporte au moins un premier et un second dispositif électroniques tels que définis précédemment, le premier dispositif étant commandé à partir d'un premier signal d'horloge externe, la sortie référence du premier dispositif étant reliée à l'entrée électronique dite entrée de déclenchement ou « Trigger » du second dispositif au moyen d'une première liaison dite liaison « Trigger » et la sortie horloge du premier dispositif étant reliée à l'entrée horloge du second dispositif au moyen d'une seconde liaison dite liaison « Horloge », chacun des autres dispositifs étant relié au dispositif suivant par deux liaisons de type liaison « Trigger » ou liaison « Horloge ».

L'invention s'applique aux chaînes laser comportant au moins les éléments optoélectroniques suivants :
- un oscillateur local émettant un faisceau optique sous forme de trains d'impulsions laser ;
- une chaîne d'amplification énergétique ;
- des moyens de mises en forme spatiale et temporelle du faisceau optique ;
- et des moyens de commande, de contrôle et de mesure,
caractérisé en ce que ladite chaîne comprend au moins :
- un séparateur optique semi-réfléchissant disposé en sortie de l'oscillateur local;
- une photodiode disposée sur une des voies dudit séparateur de façon à recevoir une partie du faisceau optique, ladite
- photodiode délivrant un signal électrique représentatif dudit faisceau optique ;
- et un dispositif ou un système électronique de génération de signaux de synchronisation tels que décrits précédemment, le signal électrique issu de la photodiode servant de signal d'horloge pour ledit dispositif ou ledit système, les signaux de synchronisation issus dudit dispositif ou dudit système étant utilisés pour synchroniser les différents éléments optoélectroniques de la chaîne.

L'invention sera mieux comprise et d'autres avantages apparaîtront à la lecture de la description qui va suivre donnée à titre non limitatif et grâce aux figures annexées parmi lesquelles :
- la figure 1 représente le synoptique général du dispositif selon l'invention ;
- la figure 2 représente la mise en forme du signal d'horloge externe ;
- la figure 3 représente la forme général des signaux de synchronisation ;
- la figure 4 représente une chaîne laser incorporant un dispositif selon l'invention ;

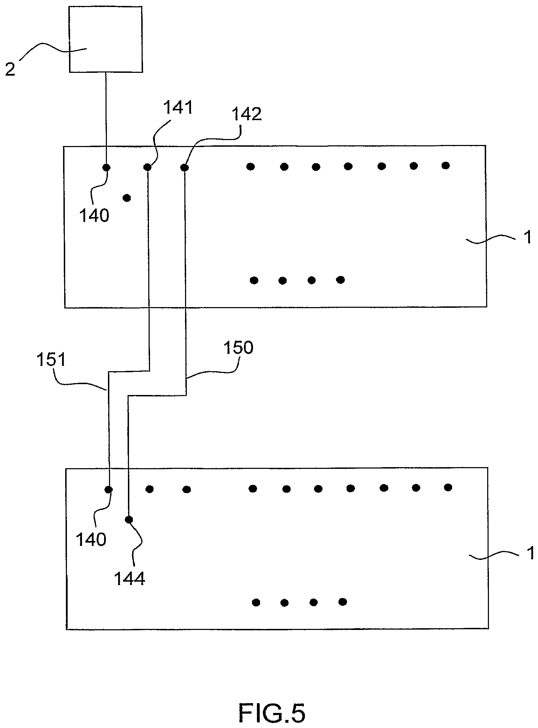

- la figure 5 représente un système de synchronisation selon l'invention comportant deux dispositifs reliés entre eux.

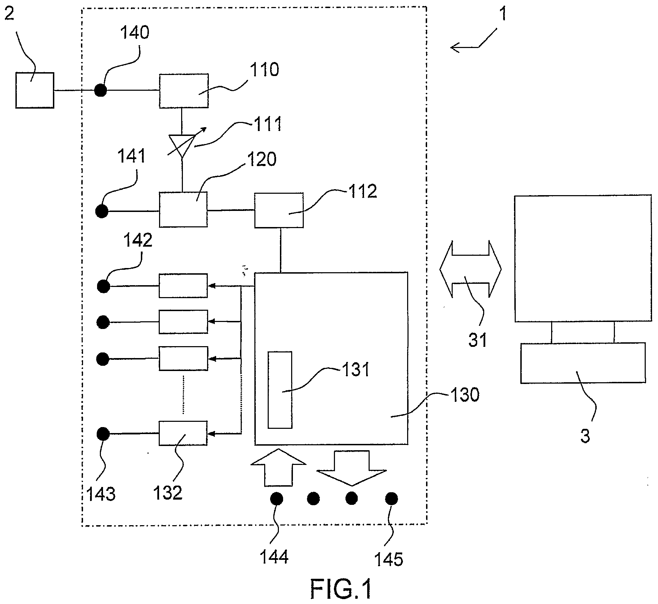

A titre d'exemple non limitatif, la figure 1 représente un dispositif électronique de génération de signaux de synchronisation 1 selon l'invention. Il comprend essentiellement :
- des premiers moyens électroniques 110, 111 et 112 de mise en forme d'un signal d'horloge externe de façon à obtenir un signal sinusoïdal de fréquence identique à la première fréquence d'oscillation ;
- des seconds moyens électroniques 130, 131 et 132 de génération à partir dudit signal sinusoïdal :
   ∘ d'un premier signal périodique de synchronisation servant de référence de base de temps, ledit signal ayant une première fréquence de répétition, ledit signal fourni sur une sortie électronique 142 dite sortie référence.
   ∘ d'une pluralité de seconds signaux périodiques de synchronisation ayant des secondes fréquences de répétition, lesdits seconds signaux étant décalés d'une durée programmable par rapport au premier signal de synchronisation, lesdits seconds signaux étant fournis sur des sorties électroniques 143 dites sorties signaux à délais programmés.
- des moyens de génération 120 d'un second signal d'horloge externe de synchronisation ayant une fréquence identique au premier signal d'horloge externe, ledit signal étant fourni sur une sortie électronique 141 dite sortie horloge.
- des moyens d'interface électronique 31 avec un micro-ordinateur 3, ledit micro-ordinateur permettant de commander et de programmer tout ou partie des fonctions du dispositif.
- des moyens électroniques de déclenchement permettant de synchroniser certaines fonctions du dispositif à partir d'au moins un signal externe, ledit signal étant fourni sur une entrée électronique 144 dite entrée de déclenchement ou « Trigger ».
- des moyens de commande permettant de délivrer des signaux de commande pour des dispositifs électroniques ou pour des dispositifs électromécaniques ou pour des systèmes de sécurité, lesdits signaux étant délivrés sur des sortie électroniques de commande 145.

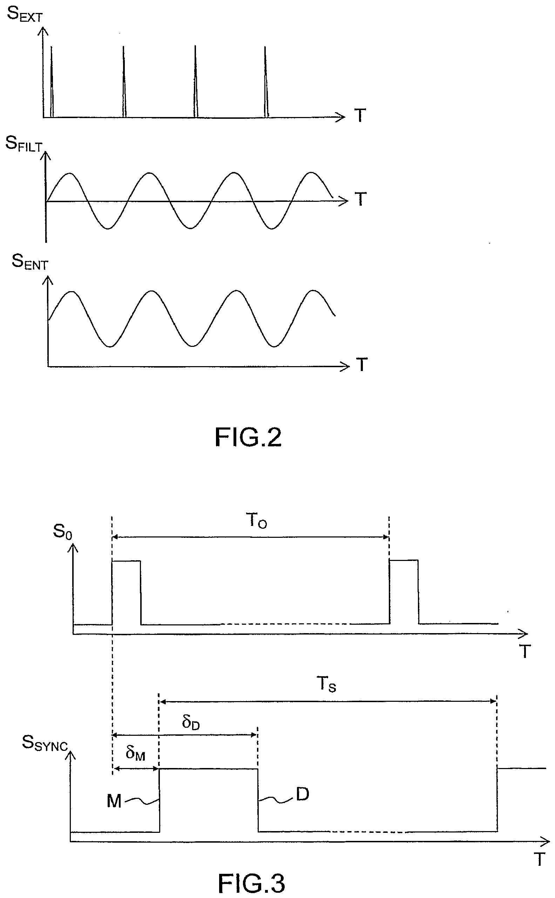

Un certain nombre d'instruments ou de systèmes électroniques ou optoélectroniques, tels les lasers impulsionnels, délivrent un signal d'horloge de très grande stabilité. Le principe de l'invention est d'utiliser ce signal d'horloge pour synchroniser les différentes composantes du dispositif à synchroniser. Pour obtenir un bon signal d'horloge, il est important que ledit signal ne comporte qu'une seule fréquence, c'est-à-dire que sa variation d'amplitude en fonction du temps soit une sinusoïde parfaite. Or, le signal d'horloge externe d'origine, qui est, par exemple, un signal impulsionnel périodique, peut comporter, en dehors de sa fréquence fondamentale correspondant à la périodicité du signal, des fréquences harmoniques multiples de cette fréquence fondamentale. Sur la figure 1, ce signal d'horloge est fourni par la source 2. Par conséquent, le dispositif selon l'invention comporte des premiers moyens électroniques 110, 111 et 112 permettant d'obtenir à partir d'un signal d'horloge externe S_{EXT} un signal filtré monofréquence S_{ENT}. Ces moyens comprennent essentiellement un filtrage électronique 110 et un amplificateur à gain variable 111 permettant d'obtenir un signal filtré sinusoïdal S_{FILT} d'amplitude connue dont la fréquence est égale à la fréquence de répétition du signal d'horloge. Le dispositif électronique additionneur 112 permet de rajouter au signal sinusoïdal une composante continue au moins égale à la moitié de l'amplitude du signal sinusoïdal de façon que le signal final S_{ENT} soit constamment positif. Cette dernière disposition simplifie le traitement ultérieur par les seconds moyens électroniques de génération des signaux de synchronisation. Les 3 courbes de la figure 2 représentent les formes successives du signal en fonction du temps T à travers le moyens électroniques de mise en forme. La première courbe représente le signal d'horloge externe S_{EXT}, la seconde courbe ce même signal filtré S_{FILT} et la dernière le signal S_{ENT} à la sortie du dispositif électronique additionneur 112.

Entre l'amplificateur à gain variable 111 et le dispositif additionneur 112, est disposé un coupleur électronique 120 permettant de générer un second signal d'horloge externe de synchronisation ayant une fréquence identique au premier signal d'horloge externe, ledit signal étant fourni sur une sortie électronique 141 dite sortie ho rloge.

La fonction principale des seconds moyens électroniques est de générer à partir du signal sinusoïdal précédent S_{ENT} les signaux de synchronisation S_{SYNC}. Le coeur de ces moyens électroniques est constitué par un composant numérique programmable 130 qui peut être de type FPGA, acronyme anglo-saxon pour « Fast Programmable Gate Array ». Ce composant numérique programmable génère :
- un premier signal périodique de synchronisation S₀ servant de référence de base de temps, ledit signal ayant une première fréquence de répétition, ledit signal fourni sur une sortie électronique 142 dite sortie référence.
- une pluralité de seconds signaux périodiques de synchronisation S_{SYNC} ayant des secondes fréquences de répétition, lesdits seconds signaux étant décalés d'une durée programmable δ_{M} par rapport au premier signal de synchronisation S₀, lesdits seconds signaux étant fournis sur des sorties électroniques 143 dites sorties signaux à délais programmés.

La forme des signaux de synchronisation est illustrée en figure 3. Les signaux de synchronisation S₀ et S_{SYNC} ont la forme de trains d'impulsions temporelles identiques, chaque impulsion ayant la forme d'un créneau, le front de montée M et le front de descente D dudit créneau étant décalés d'une première durée δ_{M} et d'une seconde durée δ_{D} programmables par rapport au front de montée du créneau correspondant du premier signal de synchronisation S₀ pris comme référence. Les durées T_{O} et T_{S} séparant les impulsions des signaux de synchronisation S₀ et S_{SYNC} sont égales aux inverses des fréquences de répétition f₀ et f_{SYNC} des signaux de synchronisation S₀ et S_{SYNC}. La fréquence de répétition f_{SYNC} peut être égale ou être un sous-multiple de la fréquence de répétition f_{O}.

Le composant numérique programmable 130 fonctionne à la fréquence d'horloge et ne peut délivrer des signaux avec une résolution temporelle supérieure à la période de ladite fréquence d'horloge. Ainsi, si la fréquence d'horloge est de 100 mégaHertz, la résolution intrinsèque du composant numérique est de 10 nanosecondes. Pour obtenir des résolutions temporelles inférieures, on dispose de lignes à retard 132 programmables en sortie du composant numérique programmable 130, chacun des seconds signaux de synchronisation S_{SYNC} étant issus des lignes à retard. On obtient ainsi des précisions temporelles de front de montée et de front de descente des créneaux bien inférieure à la période temporelle de l'horloge externe. Avec l'exemple précédent, il est possible d'obtenir des résolutions temporelles de l'ordre de 250 picosecondes avec une incertitude temporelle encore appelée en terminologie anglo-saxonne « jitter » de l'ordre de 50 picosecondes.

Pour des raisons de confort d'utilisation et d'ergonomie, les différentes fonctions du dispositif peuvent être contrôlés par un micro-ordinateur 3 au moyen d'interfaces électroniques 31 représentées symboliquement par la double flèche de la figure 1. Ces interfaces électroniques 31 peuvent être de simples liaisons électroniques ou être définies selon une norme électronique d'échange de données entre équipements électroniques comme, par exemple, la norme RS232. Le logiciel de commande et de contrôle peut être développé à l'aide de logiciels spécifiques comme le logiciel de contrôle d'instruments de mesure connu sous la marque LABVIEW développé par la société National Instruments. Il est avantageux, lorsque le dispositif de synchronisation n'est plus sous le contrôle du micro-ordinateur 3, que les paramètres programmés, en particulier les différents délais régissant les signaux de synchronisation soient conservés de façon que le dispositif puisse continuer à fonctionner de façon autonome hors contrôle du micro-ordinateur 3. A cette fin, le composant numérique programmable dispose d'une mémoire électronique 131.

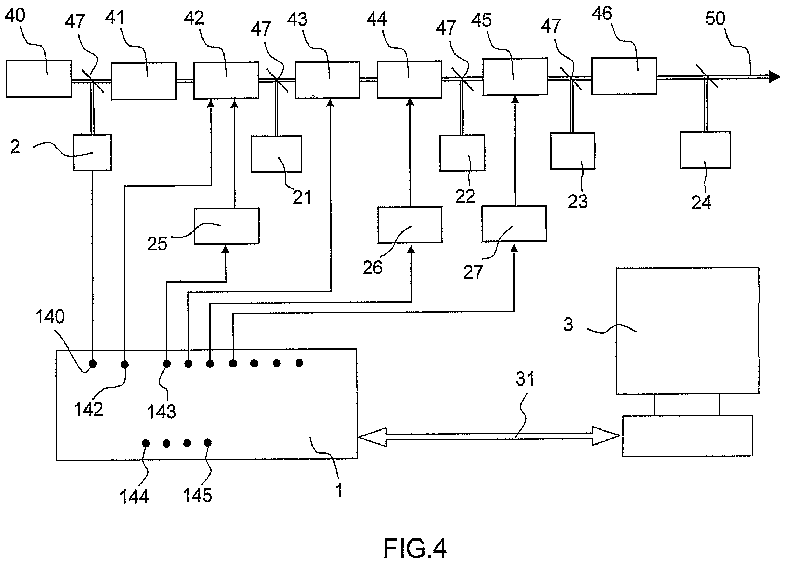

A titre d'exemple, la figure 4 illustre un système comportant un dispositif de synchronisation 1 selon l'invention. Le dispositif nécessitant des signaux de synchronisation est une chaîne laser émettant des impulsions ultra-brèves. Le faisceau laser émis 50 est symbolisé sur la figure 4 par une flèche double. La chaîne comprend successivement :
- un oscillateur optique 40 délivrant des trains d'impulsions laser. Généralement, la durée des impulsions est de l'ordre de quelques centaines de femtosecondes et elles sont émises à haute fréquence de répétition, l'ordre de grandeur de cette première fréquence est de quelques dizaines de mégaHertz. Cette fréquence de répétition est d'une très grande stabilité compte-tenu du très faible bruit de phase de l'oscillateur ;
- un premier dispositif optique 41 à réseau de diffraction encore appelé en terminologie anglo-saxonne « Stretcher » permettant l'élargissement temporelle des impulsions femtosecondes. La durée des impulsions est ainsi multipliée d'un facteur compris entre 1000 et 10 000. En élargissant ainsi l'impulsion, on diminue d'autant sa puissance crête qui est considérable en sortie de chaîne. Elle pourra alors être amplifiée de façon importante en toute sécurité pour les différents éléments optiques de la chaîne ;
- un premier amplificateur 42 dit de régénération permettant de fournir à partir des impulsions issues du « stretcher » des impulsions dans un mode optique déterminé ayant une énergie plus importante. Ces impulsions sont délivrées à basse fréquence de répétition, comprise entre 1 Hertz et 500 kilohertz;
- un dispositif à cellule de Pockels 43 permettant de limiter le bruit des impulsions en limitant strictement leur durée temporelle ;
- un ensemble de pré-amplification 44 et d'amplification 45 de l'impulsion laser ;
- enfin, un second dispositif 46 à réseau de diffraction encore appelé en terminologie anglo-saxonne « compressor » permettant la compression temporelle de l'impulsion de façon à lui rendre sa durée temporelle d'origine et à augmenter ainsi sa puissance crête.

Bien entendu, selon les besoins, cette chaîne peut contenir d'autres éléments optiques, elle peut posséder une voie d'amplification ou plusieurs en parallèle, ...

Afin de disposer de données et de caractéristiques géométriques, photométriques et spectroscopiques sur les impulsions émises, des prélèvements sont effectués à différents endroits de la chaîne laser. Ces prélèvements sont effectuées au moyen de lames semi-réfléchissantes 47 disposées le long du faisceau optique 50, les faisceaux lumineux ainsi prélevés sont envoyés par exemple sur des photodiodes de mesure 2, 22 et 24, des caméras ultra-rapides 21 et 23, encore appelées en terminologie anglo-saxonne « streak camera », des oscilloscopes, ... Ainsi, il est possible d'envoyer sur la photodiode 2 une partie du train d'impulsions laser issu de l'oscillateur optique 40. Le signal électrique issu de la dite photodiode est alors fourni sur l'entrée horloge 140 du dispositif de synchronisation 1 selon l'invention. A partir de ce signal, le dispositif de synchronisation 1 délivre :
- un premier signal périodique de synchronisation S₀ servant de référence de base de temps, ledit signal ayant une fréquence de répétition égale à la basse fréquence de répétition des impulsions. Ledit signal est fourni sur une sortie électronique 142 dite sortie référence et commande le déclenchement du premier amplificateur 42 dit de régénération au moyen d'un dispositif de déclenchement 25 ;
- une première pluralité de seconds signaux périodiques de synchronisation S_{SYNC}, lesdits seconds signaux étant décalés d'une durée programmable par rapport au premier signal de synchronisation, lesdits seconds signaux étant fournis sur des sorties électroniques 143 dites sorties signaux à délais programmés et commandant les différents éléments optiques de la chaîne au moyen de dispositifs de déclenchement 26 et 27.

Le dispositif de synchronisation 1 délivre également :
- des signaux de commande qui peuvent être utilisés pour assurer soit la protection des éléments de la chaîne en cas de dysfonctionnement de l'oscillateur, soit la protection des utilisateurs.

L'ensemble des paramètres du dispositif de synchronisation est géré au moyen d'un micro-ordinateur 3 par l'intermédiaire d'une interface 31 représentée par une flèche double sur la figure 4.

Le nombre de signaux de synchronisation issu d'un même dispositif est nécessairement limité. Or, certains systèmes, notamment certaines chaînes laser impulsionnelle comportent un grand nombre d'éléments nécessitant d'être synchronisés entre eux. Dans ce cas, le dispositif selon l'invention peut être relié à d'autres dispositifs identiques de façon à former un système de synchronisation destiné à synchroniser l'ensemble des éléments de la chaîne. Pour que les signaux de synchronisation soient parfaitement synchronisés entre eux, il faut remplir deux conditions :
- les différents dispositifs de synchronisation doivent fonctionner avec la même horloge interne ;
- les signaux de synchronisation doivent être synchronisés par rapport à une base de temps unique.

Pour réaliser ces deux conditions, il suffit de relier entre eux deux dispositifs de synchronisation 1 successifs selon la disposition suivante :
- la sortie référence 142 du premier dispositif est reliée à l'entrée électronique 144 dite entrée « Trigger » du second dispositif au moyen d'une première liaison 150 dite liaison « Trigger » ;
- et la sortie horloge 141 du premier dispositif étant reliée à l'entrée horloge 140 du second dispositif au moyen d'une seconde liaison 151 dite liaison « Horloge »,
chacun des autres dispositifs étant relié au dispositif suivant par deux liaisons de type liaison « Trigger » ou liaison « Horloge ». Les liaisons « Horloge » et « Trigger » introduisent des retards de quelques nanosecondes par mètre de câble électrique. Ces retards peuvent facilement être compensés au niveau des composants numériques programmables de chaque dispositif de synchronisation.

Bien entendu, le premier dispositif est relié à une source externe de synchronisation 2.

## Revendications

1. Chaîne laser comportant au moins les éléments optoélectroniques suivants :
• un oscillateur local (40) émettant un faisceau optique (50) sous forme de trains d'impulsions laser ;
• une chaîne d'amplification énergétique (42, 44, 45) ;
• des moyens de mises en forme spatiale et temporelle du faisceau optique (41, 43, 46) ;
• et des moyens de commande, de contrôle et de mesure (2, 3, 21, 22, 23, 24, 25, 26, 27, 31), **caractérisé en ce que** ladite chaîne comprend au moins :
• un séparateur optique (47) semi-réfléchissant disposé en sortie de l'oscillateur local ;
• une photodiode (2) disposée sur une des voies dudit séparateur (47) de façon à recevoir une partie du faisceau optique, ladite photodiode délivrant un signal électrique représentatif dudit faisceau optique ;
**Caractérisé en ce que** ladite chaîne laser comporte un dispositif électronique de génération de signaux de synchronisation (1) destiné à fonctionner à partir du signal électrique issu de la photodiode utilisé comme premier signal d'horloge externe, ledit signal émis à une première fréquence d'oscillation, ledit signal étant fourni sur une entrée dite entrée horloge (140), ledit dispositif électronique comportant au moins :
• des premiers moyens électroniques (110, 111, 112) de mise en forme du signal d'horloge externe de façon à obtenir un signal sinusoïdal de fréquence identique à la première fréquence d'oscillation ;
• des seconds moyens électroniques (130) de génération à partir dudit signal sinusoïdal :
∘ d'un premier signal périodique S₀ de synchronisation servant de référence de base de temps, ledit signal ayant une première fréquence de répétition, ledit signal fourni sur une sortie électronique dite sortie référence (142).
∘ d'une pluralité de seconds signaux périodiques S_{SYNC} de synchronisation ayant des secondes fréquences de répétition, lesdits seconds signaux étant décalés d'une durée programmable par rapport au premier signal de synchronisation, lesdits seconds signaux étant fournis sur des sorties électroniques dites sorties signaux à délais programmés.

2. Chaîne laser selon la revendication 1, **caractérisé en ce que** le dispositif comporte également des moyens de génération (120) d'un second signal d'horloge externe de synchronisation ayant une fréquence identique au premier signal d'horloge externe, ledit signal étant fourni sur une sortie électronique (141) dite sortie horloge.

3. Chaîne laser selon la revendication 1, **caractérisé en ce que** les seconds moyens électroniques (130) comprennent un composant numérique programmable, notamment de type FPGA, ledit composant numérique programmable commandant un ensemble de lignes à retard (132), chacun des seconds signaux de synchronisation S_{SYNC} étant issus desdites lignes à retard.

4. Chaîne laser selon la revendication 3, **caractérisé en ce que** le premier signal de synchronisation S₀ a la forme d'un train d'impulsions temporelles identiques, chaque impulsion ayant la forme d'un créneau ; les seconds signaux de synchronisation S_{SYNC} ont également la forme de trains d'impulsions temporelles identiques, chaque impulsion ayant la forme d'un créneau, le front de montée M et le front de descente D dudit créneau étant décalés d'une première durée δ_{M} et d'une seconde durée δ_{D} programmables par rapport au front de montée du créneau correspondant du premier signal de synchronisation S₀.

5. Chaîne laser selon la revendication 3, **caractérisé en ce que** le composant numérique programmable (130) comprend une mémoire électronique (131) dans laquelle sont stockées les paramètres nécessaires permettant au dispositif électronique de fonctionner en autonome.

6. Chaîne laser selon la revendication 1, **caractérisé en ce que** le dispositif comporte des moyens d'interface électronique (31) avec un micro-ordinateur (3), ledit micro-ordinateur permettant de commander et de programmer les fonctions du dispositif (1).

7. Chaîne laser selon la revendication 1, **caractérisé en ce que** le dispositif comprend des moyens électroniques de déclenchement permettant de synchroniser certaines fonctions du dispositif à partir d'au moins un signal externe, ledit signal étant fourni sur une entrée électronique (144) dite entrée de déclenchement ou « Trigger ».

8. Chaîne laser selon la revendication 1, **caractérisé en ce que** le dispositif comprend des moyens de commande permettant de délivrer des signaux de commande pour des dispositifs électroniques ou pour des dispositifs électromécaniques ou pour des systèmes de sécurité, lesdits signaux étant délivrés sur des sortie électroniques de commande (145).

9. Chaîne laser selon la revendication 1, **caractérisé en ce que** les premiers moyens électroniques comportent un dispositif de filtrage électronique (110) et un dispositif à gain variable (111).

10. Chaîne laser selon les revendications 2 et 8, **caractérisé en ce que** les moyens de génération du second signal d'horloge externe de synchronisation sont essentiellement un coupleur électronique (120) placé en sortie du dispositif à gain variable (111).

11. Chaîne laser selon l'une des revendications précédentes, **caractérisé en ce que** la première fréquence d'oscillation est comprise entre 20 mégaHertz et 100 mégahertz.

12. Chaîne laser selon l'une des revendications précédentes, **caractérisé en ce que** la fréquence de répétition est comprise entre 1 Hertz et 20 mégahertz.

13. Chaîne laser selon la revendication 4, **caractérisé en ce que** les fronts de montée M et de descente D des créneaux ont une précision temporelle de 250 picosecondes.

14. Chaîne laser selon la revendication 1 **caractérisé en ce qu'**elle comporte au moins un premier et un second dispositif électroniques,
le premier dispositif comportant également des moyens de génération d'un second signal d'horloge externe de synchronisation ayant une fréquence identique au premier signal d'horloge externe, ledit signal étant fourni sur une sortie électronique dite sortie horloge,
le second dispositif comprenant des moyens électroniques de déclenchement permettant de synchroniser certaines fonctions du dispositif à partir d'au moins un signal externe, ledit signal étant fourni sur une entrée électronique dite entrée de déclenchement ou « Trigger »,
le premier dispositif étant commandé à partir du premier signal d'horloge externe, la sortie référence du premier dispositif étant reliée à l'entrée électronique dite entrée de déclenchement ou « Trigger » du second dispositif au moyen d'une première liaison dite liaison « Trigger » et la sortie horloge du premier dispositif étant reliée à l'entrée horloge du second dispositif au moyen d'une seconde liaison dite liaison « Horloge »,
chacun des autres dispositifs étant relié au dispositif suivant par deux liaisons de type liaison « Trigger » ou liaison « Horloge ».

## Patentansprüche

1. Laserkette, welche mindestens folgende optoelektronischen Elemente beinhaltet:
• einen lokalen Oszillator (40), welcher einen optischen Strahl (50) in Form von Laserimpulsfolgen aussendet;
• eine energetische Verstärkungskette (42, 44, 45);
• Mittel zur räumlichen und zeitlichen Formatierung des optischen Strahls (41, 43, 46);
• und Steuerungs-, Prüf- und Messmittel (2, 3, 21, 22, 23, 24, 25, 26, 27, 31), **dadurch gekennzeichnet, dass** die Kette mindestens Folgendes beinhaltet:
• eine halbreflektierende optische Trennvorrichtung (47), welche am Ausgang des lokalen Oszillators angeordnet ist;
• eine Photodiode (2), welche an einem der Kanäle der Trennvorrichtung (47) so angeordnet ist, dass sie einen Teil des optischen Strahls empfängt, wobei die Photodiode ein elektrisches Signal abgibt, welches den optischen Strahl darstellt;
**dadurch gekennzeichnet, dass** die Laserkette eine elektronische Vorrichtung zur Erzeugung von Synchronisationssignalen (1) beinhaltet, welche dazu bestimmt ist, anhand des aus der Photodiode stammenden elektrischen Signals zu arbeiten, welches als erstes externes Uhrsignal verwendet wird, wobei das Signal bei einer ersten Oszillationsfrequenz ausgesendet wird, wobei das Signal an einem Eingang, genannt Uhreingang (140), bereitgestellt wird, wobei die elektronische Vorrichtung mindestens Folgendes beinhaltet:
• erste elektronische Mittel (110, 111, 112) zum Formatieren des externen Uhrsignals, so dass ein Sinussignal mit identischer Frequenz wie die erste Oszillationsfrequenz erzielt wird;
• zweite elektronische Mittel (130) zum Erzeugen, anhand des Sinussignals:
∘ eines ersten periodischen Synchronisationssignals S₀, welches als Zeitbasis-Referenz dient, wobei das Signal eine erste Wiederholungsfrequenz besitzt, wobei das Signal an einem elektronischen Ausgang, genannt Referenzausgang (142), bereitgestellt wird,
∘ einer Vielzahl zweiter periodischer Synchronisationssignale S_{SYNC}, welche zweite Wiederholungsfrequenzen besitzen, wobei die zweiten Signale um eine programmierbare Dauer zum ersten Signal verschoben sind, wobei die zweiten Signale an elektronischen Ausgängen bereitgestellt werden, genannt Signalausgänge mit programmierten Verzögerungen.

2. Laserkette nach Anspruch 1, **dadurch gekennzeichnet, dass** die Vorrichtung zudem Mittel zur Erzeugung (120) eines zweiten externen Synchronisations-Uhrsignals beinhaltet, welches eine identische Frequenz wie das erste externe Uhrsignal besitzt, wobei das Signal an einem elektronischen Ausgang (141), genannt Uhrausgang, bereitgestellt wird.

3. Laserkette nach Anspruch 1, **dadurch gekennzeichnet, dass** die zweiten elektronischen Mittel (130) einen digitalen, programmierbaren Baustein beinhalten, insbesondere vom Typ FPGA, wobei der digitale, programmierbare Baustein eine Reihe von Leitungen mit Verzögerung (132) steuert, wobei jedes der zweiten Synchronisationssignale S_{SYNC} den Leitungen mit Verzögerung entstammt.

4. Laserkette nach Anspruch 3, **dadurch gekennzeichnet, dass** das erste Synchronisationssignal S₀ die Form einer Impulsfolge mit zeitlich identischen Impulsen besitzt, wobei jeder Impuls die Form eines Schlitzes besitzt; wobei die zweiten Synchronisationssignale S_{SYNC} ebenfalls die Form von Impulsfolgen mit zeitlich identischen Impulsen besitzen, wobei jeder Impuls die Form eines Schlitzes besitzt, wobei die Anstiegsfront M und die Abstiegsfront D des Schlitzes um eine erste Dauer δ_{M} und um eine zweite Dauer δ_{D}, welche programmierbar sind, in Bezug auf die entsprechende Anstiegsfront des Schlitzes des ersten Synchronisationssignals S₀ verschoben sind.

5. Laserkette nach Anspruch 3, **dadurch gekennzeichnet, dass** der digitale, programmierbare Baustein (130) einen elektronischen Speicher (131) beinhaltet, in welchem die erforderlichen Parameter gespeichert sind, welche es der elektronischen Vorrichtung ermöglichen, autonom zu arbeiten.

6. Laserkette nach Anspruch 1, **dadurch gekennzeichnet, dass** die Vorrichtung elektronische Schnittstellenmittel (31) mit einem Mikrocomputer (3) beinhaltet, wobei der Mikrocomputer es ermöglicht, die Funktionen der Vorrichtung (1) zu steuern und zu programmieren.

7. Laserkette nach Anspruch 1, **dadurch gekennzeichnet, dass** die Vorrichtung elektronische Auslösemittel beinhaltet, welche es ermöglichen, bestimmte Funktionen der Vorrichtung anhand von mindestens einem externen Signal zu synchronisieren, wobei das Signal an einem elektronischen Eingang (144), genannt Auslöseeingang oder "Trigger", bereitgestellt wird.

8. Laserkette nach Anspruch 1, **dadurch gekennzeichnet, dass** die Vorrichtung elektronische Steuerungsmittel beinhaltet, die es ermöglichen, Steuersignale für elektronische Vorrichtungen oder für elektromechanische Vorrichtungen oder für Sicherheitssysteme abzugeben, wobei die Signale an elektronische Steuerungsausgänge (145) abgegeben werden.

9. Laserkette nach Anspruch 1, **dadurch gekennzeichnet, dass** die ersten elektronischen Mittel eine Vorrichtung mit elektronischer Filterung (110) und eine Vorrichtung mit variabler Verstärkung (111) beinhalten.

10. Laserkette nach den Ansprüchen 2 und 8, **dadurch gekennzeichnet, dass** die Mittel zur Erzeugung des zweiten externen Synchronisations-Uhrsignals im Wesentlichen ein elektronischer Koppler (120) sind, welcher am Ausgang der Vorrichtung mit variabler Verstärkung (111) platziert ist.

11. Laserkette nach einem der vorhergehenden Ansprüche, **dadurch gekennzeichnet, dass** die erste Oszillationsfrequenz zwischen 20 Megahertz und 100 Megahertz liegt.

12. Laserkette nach einem der vorhergehenden Ansprüche, **dadurch gekennzeichnet, dass** die Wiederholungsfrequenz zwischen 1 Hertz und 20 Megahertz liegt.

13. Laserkette nach Anspruch 4, **dadurch gekennzeichnet, dass** die Anstiegsfront M und die Abstiegsfront D der Schlitze eine zeitliche Genauigkeit von 250 Picosekunden besitzen.

14. Laserkette nach Anspruch 1, **dadurch gekennzeichnet, dass** sie mindestens eine erste und eine zweite elektronische Vorrichtung beinhaltet,
wobei die erste Vorrichtung zudem Mittel zur Erzeugung eines zweiten externen Synchronisations-Uhrsignals mit einer Frequenz besitzt, welche identisch mit dem ersten externen Synchronisations-Uhrsignal ist, wobei das Signal an einem elektronischen Ausgang, genannt Uhrausgang, bereitgestellt wird,
wobei die zweite Vorrichtung elektronische Auslösemittel beinhaltet, welche es ermöglichen, bestimmte Funktionen der Vorrichtung anhand von mindestens einem externen Signal zu synchronisieren, wobei das Signal an einem elektronischen Eingang, genannt Auslöseeingang oder "Trigger", bereitgestellt wird,
wobei die erste Vorrichtung anhand des ersten externen Uhrsignals gesteuert wird, wobei der Referenzausgang der ersten Vorrichtung mit dem elektronischen Eingang, genannt Auslöseeingang oder "Trigger", der zweiten Vorrichtung mit Hilfe einer ersten Verbindung, genannt "Trigger"-Verbindung, verbunden ist und der Uhrausgang der ersten Vorrichtung mit dem Uhreingang der zweiten Vorrichtung mit Hilfe einer zweiten Verbindung, genannt "Uhr"-Verbindung, verbunden ist, wobei jede der anderen Vorrichtungen mit der nächsten Vorrichtung durch zwei Verbindungen vom Typ "Trigger"-Verbindung oder "Uhr"-Verbindung verbunden ist.

## Claims

1. A laser subsystem comprising at least the following optoelectronic elements:
• a local oscillator (40) emitting an optical beam (50) in the form of laser pulse trains;
• an energy amplification subsystem (42, 44, 45);
• means of spatially and temporally formatting the optical beam (41, 43, 46);
• and control, monitoring and measurement means (2, 3, 21, 22, 23, 24, 25, 26, 27, 31), **characterized in that** said subsystem comprises at least:
• a semi-reflecting optical splitter (47) placed at the output of the local oscillator;
• a photodiode (2) placed on one of the channels of said splitter (47) so as to receive a part of the optical beam, said photodiode delivering an electrical signal representative of said optical beam;
**characterized in that** said laser subsystem comprises an electronic device for generating synchronization signals (1) designed to operate from the electrical signal taken from the photodiode and being used as the first external clock signal, said signal being emitted at a first oscillation frequency, said signal being supplied to an input, called clock input (140), said electronic device comprising at least:
• first electronic means (110, 111, 112) for formatting the external clock signal so as to obtain a sinusoidal signal of frequency identical to the first oscillation frequency;
• second electronic means (130) for generating from said sinusoidal signal:
∘ a first periodic synchronization signal S₀ being used as a timebase reference, said signal having a first repetition frequency, said signal supplied to an electronic so-called reference output (142);
∘ a plurality of second periodic synchronization signals S_{SYNC} having second repetition frequencies, said second signals being offset by a programmable time relative to the first synchronization signal, said second signals being supplied to electronic so-called programmed delay signal outputs.

2. A laser subsystem as claimed in claim 1, **characterized in that** the device also comprises means (120) of generating a second external synchronization clock signal having a frequency identical to the first external clock signal, said signal being supplied to an electronic so-called clock output (141).

3. A laser subsystem as claimed in claim 1, **characterized in that** the second electronic means (130) include a programmable digital component, in particular of FPGA type, said programmable digital component controlling a set of delay lines (132), each of the second synchronization signals S_{SYNC} being taken from said delay lines.

4. A laser subsystem as claimed in claim 3, **characterized in that** the first synchronization signal S₀ takes the form of a train of identical temporal pulses, each pulse having the form of a crenellation; the second synchronization signals S_{SYNC} also take the form of trains of identical temporal pulses, each pulse having the form of a crenellation, the rising edge M and the falling edge D of said crenellation being offset by a first time δ_{M} and a second time δ_{D} programmable relative to the rising edge of the corresponding crenellation of the first synchronization signal S₀.

5. A laser subsystem as claimed in claim 3, **characterized in that** the programmable digital component (130) includes an electronic memory (131) in which are stored the parameters needed for the electronic device to operate independently.

6. A laser subsystem as claimed in claim 1, **characterized in that** the device comprises electronic interface means (31) with a microcomputer (3), said microcomputer making it possible to control and program the functions of the device (1).

7. A laser subsystem as claimed in claim 1, **characterized in that** the device comprises electronic triggering means making it possible to synchronize certain functions of the device from at least one external signal, said signal being supplied to an electronic so-called "Trigger" input (144).

8. A laser subsystem as claimed in claim 1, **characterized in that** the device comprises control means making it possible to deliver control signals for electronic devices or for electromechanical devices or for security systems, said signals being delivered to electronic control outputs (145).

9. A laser subsystem as claimed in claim 1, **characterized in that** the first electronic means include an electronic filtering device (110) and a variable gain device (111).

10. A laser subsystem as claimed in claims 2 and 8, **characterized in that** the means of generating the second external synchronization clock signal are essentially an electronic coupler (120) placed at the output of the variable gain device (111).

11. A laser subsystem as claimed in one of the preceding claims, **characterized in that** the first oscillation frequency is between 20 megahertz and 100 megahertz.

12. A laser subsystem as claimed in one of the preceding claims, **characterized in that** the repetition frequency is between 1 hertz and 20 megahertz.

13. A laser subsystem as claimed in claim 4, **characterized in that** the rising edge M and falling edge D of the crenellations have a temporal accuracy of 250 picoseconds.

14. A laser subsystem as claimed in claim 1, **characterized in that** it comprises at least one first and one second electronic device,
the first device comprising also means for generating a second external synchronization clock signal having a frequency identical to the first external clock signal, said signal being supplied to an electronic so-called clock output,
the second device comprising electronic triggering means making it possible to synchronize certain functions of the device from at least one external signal, said signal being supplied to an electronic so-called "Trigger" input,
the first device being controlled from the first external clock signal, the reference output of the first device being linked to the electronic so-called "Trigger" input of the second device by means of a first so-called "Trigger" link and the clock output of the first device being linked to the clock input of the second device by means of a second so-called "Clock" link,
each of the other devices being linked to the following device by two links of "Trigger" or "Clock" link type.
